(19) Europäisches Patentamt
European Patent Office
Office européen des brevets

(11) Veröffentlichungsnummer: **0 463 396 A2**

(12) # EUROPÄISCHE PATENTANMELDUNG

(21) Anmeldenummer: **91108879.7**

(51) Int. Cl.$^5$: **C08J 3/24**, //C08L101:10

(22) Anmeldetag: **30.05.91**

(30) Priorität: **12.06.90 DE 4018714**

(43) Veröffentlichungstag der Anmeldung: **02.01.92 Patentblatt 92/01**

(84) Benannte Vertragsstaaten: **CH DE FR GB IT LI NL**

(71) Anmelder: **BAYER AG**

**W-5090 Leverkusen 1 Bayerwerk(DE)**

(72) Erfinder: **Podszun, Wolfgang, Dr.**
**Roggendorfstrasse 55**
**W-5000 Köln 80(DE)**
Erfinder: **Müller, Michael, Dr.**
**Richard-Zanders-Strasse 34**
**W-5060 Bergisch Gladbach 2(DE)**
Erfinder: **Cramer Wilfried, Dr.**
**Roonstrasse 56**
**W-4150 Krefeld(DE)**
Erfinder: **Rehbold, Bodo, Dr.**
**Leipziger Strasse 18**
**W-5000 Köln 40(DE)**

(54) **Verfahren zur Herstellung von Formkörpern aus vernetzten Polymerisaten.**

(57) Die Erfindung betrifft ein Verfahren zur Herstellung von Formkörpern aus vernetzten Polymerisaten durch Verarbeiten (Formen) von unvernetzten Copolymerisaten aus Vinylverbindungen und 1 bis 3 hydrolysierbare Gruppen aufweisenden, polymerisierbaren Silanverbindungen zu den gewünschten Formkörpern und Vernetzen der Copolymerisate in den Formkörpern durch eine Nachbehandlung der Formkörper mit sauren oder alkalischen wäßrigen Lösungen.

EP 0 463 396 A2

Die Erfindung betrifft ein Verfahren zur Herstellung von Formkörpern aus speziellen vernetzten Polymerisaten und die nach diesem Verfahren erhältlichen Formkörper. Die Formkörper sind faden- oder flächenförmige Gebilde, deren Durchmesser bzw. Dicke <25 mm beträgt. Die Erfindung betrifft ferner die nach dem Verfahren erhaltenen Formkörper.

In der Praxis sind Formkörper, z.B. als Lichtwellenleiter verwendbare Monofile begehrt, die nicht nur eine hervorragende Transparenz und eine gute mechanische Festigkeit besitzen sondern die auch eine hohe Wärmeformbeständigkeit aufweisen. Die bislang wegen ihrer hervorragenden Transparenz und guten mechanischen Festigkeit als Kernmaterialien für Lichtwellenleiter vorgeschlagenen Polymethacrylsäureester haben den Nachteil, daß sie nur eine unzureichende Wärmeformbeständigkeit aufweisen, so daß sie nur bis zu Temperaturen von etwa 80°C eingesetzt werden können. Die in der EP-A 269 223 beschriebenen Copolymerisate aus Methylmethacrylat und N-Alkylmaleinimiden weisen zwar eine wesentlich verbesserte Wärmeformbeständigkeit auf, haben aber den Nachteil, daß sie nur schwierig verarbeitbar sind. In der EP-B 171 294 ist ein Verfahren zur Herstellung wärmeformbeständiger optischer Fasern beschrieben, in dem die Schwierigkeiten, die mit der Verarbeitung wärmeformbeständiger Polymerisate verbunden sind, dadurch vermieden werden, daß man den Polymerisaten, die die Wärmeformbeständigkeit bedingenden polyfunktionellen Verbindungen (Vernetzungsmittel) erst während der Verarbeitung (während des Schmelzspinnens) zusetzt. Dieses Verfahren hat den Nachteil, daß es zu aufwendig ist.

Es wurde nun gefunden, daß man auf eine wesentlich einfachere Weise Formkörper, nämlich faden- oder flächenförmige Gebilde, deren Durchmesser bzw. Dicke <25 mm, vorzugsweise <10 mm ist, aus vernetzten Polymerisaten, z.B. Copolymerisaten von (Meth)Acrylsäureestern herstellen kann, die die für Lichtleitfasern erforderlichen Eigenschaften wie hohe Transparenz, hohe mechanische Festigkeit und hohe Wärmeformbeständigkeit aufweisen, wenn man Vinylverbindungen, z.B. (Meth)Acrylsäureester, zusammen mit bestimmten, nämlich 1 bis 3 hydrolysierbare Gruppen aufweisenden, polymerisierbaren Silanen copolymerisiert, die Copolymerisate in die gewünschte Form bringt, z.B. verspinnt oder zu Folien oder Platten vergießt, und die Formkörper anschließend durch Behandeln mit wäßrigen Säuren oder wäßrigen Alkalien nachträglich härtet (vernetzt).

Überraschenderweise wurde gefunden, daß die Behandlung der Formkörper aus den unvernetzten Copolymerisaten mit den sauren oder alkalischen wäßrigen Lösungen zu einer so weitgehenden Vernetzung der Copolymerisate in den Formkörpern führt, daß diese außer der erforderlichen mechanischen Festigkeit auch die gewünschte Temperaturformbeständigkeit bei Temperaturen von >150°C aufweisen und daß diese Vernetzung der Copolymerisate in den Formkörpern zu keiner Änderung der Formen der Formkörper führt.

Die Erfindung betrifft daher ein Verfahren zur Herstellung von Formkörpern aus vernetzten Polymerisaten durch Verarbeiten (Formen) der unvernetzten Copolymerisate zu den gewünschten Formkörpern und Vernetzen der Copolymerisate in den Formkörpern durch eine Nachbehandlung der Formkörper, das dadurch gekennzeichnet ist, daß man als unvernetzte Copolymerisate Copolymerisate aus Vinylverbindungen und 1 bis 3 hydrolysierbare Gruppen aufweisenden, polymerisierbaren Silanverbindungen verwendet und die aus dem unvernetzten Copolymerisat hergestellten Formkörper mit sauren oder alkalischen wäßrigen Lösungen behandelt.

Die Erfindung betrifft ferner die nach dem Verfahren hergestellten Formkörper, d.h. Formkörper aus vernetzten Copolymerisaten, die durch Copolymerisation von Vinylverbindungen und 1 bis 3 hydrolysierbare Gruppen aufweisenden, polymerisierbaren Silanverbindungen, Verarbeiten der erhaltenen unvernetzten Copolymerisate zu Formkörpern und Behandeln dieser Formkörper in wäßrigen Säuren oder wäßrigen Alkalien, erhalten wurden.

Die 1 bis 3 hydrolysierbare Gruppen aufweisenden, polymerisierbaren Silane entsprechen der Formel

$$CH_2 = \overset{\overset{\displaystyle R^1}{|}}{C}(-CO-O-A-)_b-\overset{\overset{\displaystyle (R^2)_a}{|}}{Si}-(-X)_{3-a} \qquad (I),$$

in der

- $R^1$ Wasserstoff oder Methyl bedeutet,
- A ein geradkettiger oder verzweigter $C_2$-$C_{12}$-Alkylenrest ist, dessen Kohlenstoffkette durch -O-, -NH-, -COO- oder -NH-COO- unterbrochen sein kann,
- $R^2$ für einen $C_1$-$C_6$-Alkyl- oder einen Phenyl-Rest steht,
- X eine hydrolisierbare Gruppe bedeutet,

a den Wert null, eins oder zwei und

b den Wert null oder eins haben kann.

Als Vertreter für geradkettige oder verzweigte Alkylen-Reste mit 2 bis 12 C-Atomen seien beispielsweise genannt: der Ethylen-, Trimethylen-, Tetramethylen-, Pentamethylen-, Hexamethylen-, Octamethylen-, Decamethylen- und der Dodecamethylen-Rest sowie der Propylen-1,2- und der Butylen-1,2- und -1,3-Rest. Als Beispiele für $C_2$-$C_{12}$-Alkylen-Reste mit durch -O-, -NH-, -COO- oder -NH-COO- unterbrochene Ketten seien beispielsweise die Alkylenreste genannt, die sich von Polyethern, Polyaminen, Oligoestern oder Oligourethanen ableiten. Bevorzugt steht A für einen $C_2$-$C_8$-Alkylen-Rest, dessen Kohlenstoffkette gegebenenfalls durch -O-unterbrochen ist.

Für $R^2$ seien als $C_1$-$C_6$-Alkyl-Reste beispielsweise der Methyl-, Ethyl-, Propyl-, Isopropyl-, Butyl-, Isobutyl-, tert.-Butyl-, i-Amyl- und der n-Hexyl-Rest genannt.

Für X seien als hydrolysierbare Gruppen beispielsweise genannt: Halogenatome, vorzugsweise Chloratome; $C_1$-$C_6$-Alkoxygruppen, insbesondere die Methoxy- oder Ethoxygruppe; ferner Carboxylat- und Carbonamidgruppen, wie die Acetyloxy-, Propionyloxy-, Acetylamino- oder Propionylamino-Gruppe. Bevorzugt steht X für ein Chloratom oder eine Methoxy- oder Ethoxygruppe.

Bevorzugt sind solche Silane der Formel (I), in der a den Wert Null hat und X für eine Methoxy- oder Ethoxygruppe steht.

Als Beispiele für die Silane der Formel (I) seien genannt: Vinyl-trimethoxysilan, Vinyl-triethoxysilan, Vinyl-methyl-dimethoxysilan, Vinyl-methyl-diethoxysilan, $\gamma$-Methacryloyloxypropyl-trimethoxysilan, $\gamma$-Methacryloyl-oxypropyl-triethoxysilan, $\gamma$-Methacryloyloxypropyl-methyl-dimethoxysilan, $\gamma$-Methacryloyloxypropyl-methyldiethoxysilan, $\gamma$-Acryloyloxypropyl-trimethoxysilan, $\gamma$-Acryloyloxypropyl-triethoxysilan, $\gamma$-Acryloyloxypropyl-methyl-dimethoxysilan und $\gamma$-Acryloyloxypropyl-methyldiethoxysilan.

Als Vinylmonomere eignen sich die bekannten $\alpha,\beta$-ungesättigten Verbindungen wie Styrol, $\alpha$-Methylstyrol, Vinyltoluol, substituierte Vinyltoluole, Vinylpyridin, Acrylnitril und die Ester der Acryl- und Methacrylsäure. Bevorzugt sind die Ester der (Meth)Acrylsäure mit 1 bis 20 C-Atomen im Alkoholteil; beispielhaft seien genannt: Methyl(meth)acrylat, Ethyl(meth)acrylat, n-Propyl(meth)acrylat, iso-Propyl(meth)acrylat, n-Butyl-(meth)acrylat, iso-Butyl(meth)acrylat, tert.-Butyl(meth)acrylat und 2-Ethylhexyl(meth)acrylat. Gut geeignet sind auch Methacrylsäureester cycloaliphatischer Alkohole, wie Cyclohexylmethacrylat, Furfurylmethacrylat, 1-Adamantylmethacrylat, 2-Adamantylmethacrylat, Menthylmethacrylat, Bornylmethacrylat, 2,2,5-Trimethylcyclohexylmethacrylat und Tricyclo[5.2.1.$0^{2,6}$]decyl-(2)methacrylat. Besonders bevorzugt werden Mischungen verschiedener (Meth)acrylsäureester, insbesondere Mischungen mit einem Gehalt von 40 bis 95 Gew.-% Methylmethacrylat verwendet.

Die für die erfindungsgemäße Herstellung der Formkörper zu verwendenden Gemische aus Vinylverbindungen und 1 bis 3 hydrolysierbare Gruppen aufweisenden, polymerisierbaren Silanen der Formel (I) bestehen zu 50 bis 99,5 Gew.-% aus polymerisierbaren Vinylverbindungen und 50 bis 0,5 Gew.-% Silanen der Formel (I), bevorzugt aus 75 bis 98 Gew.-% polymerisierbaren Vinylverbindungen und 25 bis 2 Gew.-% Silanen der Formel (I) und besonders bevorzugt aus 85 bis 90 Gew.-% polymerisierbaren Vinylverbindungen und 15 bis 2 Gew.-% Silanen der Formel (I).

Die Copolymerisation der Vinylverbindungen und der Silane der Formel (I) kann nach den allgemein bekannten Polymerisationsverfahren erfolgen. Solche Verfahren sind z.B. in Houben-Weyl, Methoden der organischen Chemie, 4. Auflage, "Makromolekulare Stoffe" Teil 1, G. Thieme Verlag 1987 beschrieben. In Hinblick auf eine hohe Lichtdurchlässigkeit der Polymerisate sind Suspensions-, Masse- und vor allem Lösungspolymerisationsverfahren bevorzugt. Geeignete Lösungsmittel sind beispielsweise Toluol, Xylol, Ethylacetat, Butylacetat, tert`-Butylmethyl-keton, Tetrahydrofuran oder Dioxan. Die Initiierung der Polymerisation erfolgt mit üblichen Radikalbildnern, insbesondere Peroxyverbindungen und Azoverbindungen. Beispielhaft seien genannt: Dibenzoylperoxid, Dilauroylperoxid, Di-tert.-butylperoxid, Dicumylperoxid und 2,2'-Azobisisobutyronitril.

Das Molekulargewicht (Gewichtsmittel) der unvernetzten Polymerisate betragen vorzugsweise 20 000 bis 500 000. Die Einstellung des Molekulargewichts wird vorzugsweise über die Initiatormenge und die Polymerisationstemperatur gesteuert. Es können aber auch Molekulargewichtsregler wie n-Propylmercaptan, n-Hexylmercaptan oder n-Dodecylmercaptan verwendet werden.

Zur Herstellung der Formkörper aus dem unvernetzten Polymerisat wird dieses aus Lösung oder aus der Schmelze nach an sich bekannten Verfahren, z.B. nach dem Schmelzspinnverfahren oder aus Lösungen versponnen, gezogen oder vergossen (siehe z.B. Ullmanns Encyclopedia of Industrial Chemistry Fourth Edition, 1987, Vol. A 10, Fibers - 4; Synthetic Organic, S. 612, 613, 577, 578).

Bei den erfindungsgemäß herstellbaren Formkörpern, den faden- oder flächenförmigen Gebilden, deren Durchmesser bzw. Dicke <25 mm, vorzugsweise <10 mm beträgt, handelt es sich um Monofile, Fasern, Folien und unterschiedlich geformte Platten.

Die erfindungsgemäße Behandlung dieser Formkörper aus unvernetztem Copolymerisat wird in sauren oder alkalischen wäßrigen Lösungen, deren pH-Wert <2 oder >13 beträgt, vorgenommen. Vorzugsweise handelt es sich um verdünnte wäßrige Säure- oder Alkalilösungen. Die Einstellung des pH-Wertes in dieser wäßrigen Säure- und Alkalilösungen wird vorzugsweise mit Salzsäure oder Natronlauge vorgenommen. Die Behandlung mit den wäßrigen Säure- oder Alkalilösungen wird bei Temperaturen von 20 bis 150 °C, vorzugsweise bei Temperaturen von 60 bis 100 °C vorgenommen. Die Reaktionszeit beträgt in Abhängigkeit von der gewählten Behandlungstemperatur und der Dicke der Formkörper einige Minuten bis einige Stunden. Nach Beendigung der Behandlung (Vernetzungsreaktion) wird der Formkörper, vorzugsweise bei Temperaturen von 100 bis 180 °C getempert. Bei der erfindungsgemäßen Nachbehandlung der Formkörper aus den unvernetzten Copolymerisaten findet eine Vernetzung der Copolymerisate durch Hydrolyse der Gruppen X in den einpolymerisierten Silanen der Formel (II) statt.

Den wäßrigen Säure- bzw. Alkalilösungen kann zur Erhöhung der Eindringtiefe der Lösungen in die Copolymerisat-Formkörper mit Wasser mischbare organische Lösungsmittel wie Tetrahydrofuran oder Dimethylformamid zugesetzt werden. Der Vorgang der Härtung der Formkörper in den sauren oder alkalischen wäßrigen Lösungen läßt sich daran erkennen, daß die Copolymerisate vor der Vernetzungsbehandlung leicht löslich sind (Gelgehalt der Lösungen im Tetrahydrofuran 25 °C: <5 %; Erweichungstemperatur: ~100 bis 130 °C). Nach erfolgter Vernetzungsreaktion sind die Copolymerisat-Formkörper dagegen unlöslich (Gelgehalt in Tetrahydrofuran bei 25 °C: >90 %; Erweichungstemperatur: >250 °C).

Die nach dem erfindungsgemäßen Verfahren erhältlichen Formkörper zeichnen sich gegenüber den bekannten, als Lichtwellenleiter verwendeten Polymethylmethacrylaten durch eine entscheidend verbesserte Wärmeformbeständigkeit und Lösungsmittelbeständigkeit aus.

Beispiel 1

a) Herstellung eines unvernetzten Copolymerisates:

In einem 40 l-Rührautoklaven werden 15 000 g wasserfreies Toluol, 4750 g frisch destilliertes Methylmethacrylat, 250 g γ-Methacryloyloxypropyltrimethoxysilan und 33 g wasserfreies Dibenzoylperoxid 2 Stunden bei 80 °C verrührt (Schergeschwindigkeit: 200 rpm/h). Anschließend wird das Polymerisationsgemisch unter Rühren weitere 2 Stunden auf Rückflußtemperatur (110 °C) erhitzt.

b) Isolierung des in a) erhaltenen unvernetzten Copolymerisates:

Die bei a) erhaltene Lösung wurde mit Hilfe eines Zweiwellenextruders ZSK 32 im Vakuum von 10 mbar vom Lösungsmittel und den flüchtigen Bestandteilen befreit. Die Massetemperatur betrug dabei 175 °C. Es wurden 4520 g Granulat erhalten. Die Grenzviskosität des Copolymerisates (bestimmt in Tetrahydrofuran) betrug bei 25 °C 0,37 dl/g, der Gelgehalt 0,8 Gew.-%. Die Erweichungstemperatur lag bei 110 °C (gemessen an Probekörpern mit dem Thermomechanischen Analysator TMS-1 der Fa. Perkins-Elmer, Meßsondendurchmesser 1 mm, Drucklast 0,2 N, Heizrate 5 K/min).

c) Verarbeitung des nach nach b) erhaltenen Copolymerisat-Granilates zu einem fadenförmigen Formkörper:

Das mehrere Stunden unter Luftabschluß getrocknete Granulat aus Schritt b) wurde in einer Extrusionsspinnapparatur mit Entgasungszone aufgeschmolzen und einfädig versponnen.

| Spinnbedingungen: | |
|---|---|
| Extrudertemperatur: | 200 °C |
| Düsentemperatur: | 193 °C |
| Düse (Lochzahl/Durchmesser): | 1/0,5 mm |
| Siebfilter: | 10 000 Maschen/$cm^2$ |
| Abzug: | 60 m/min |
| Durchsatz: | 2,8 g/min |

Es wurde ein transparentes Monofilament erhalten, das frei von Störstellen war.

d) Vernetzung des in c) erhaltenen Formkörpers:

Die schmelzgesponnene Faser wurde in einem Wasserbad (pH-Wert: 1, mit HCl eingestellt) 5 Stunden bei 96 °C behandelt. Anschließend wurde sie 2 Stunden bei 130 °C und 2 weitere Stunden bei 150 °C in einem Trockenschrank getempert. Der Gelgehalt betrug dann 94 Gew.-%. In gleicher Weise wurden Probekörper mit den Abmessungen 4 x 4 x 2 mm für analytische Zwecke nachbehandelt. In diesen wurde ein Gelgehalt von 93 % und eine Erweichungstemperatur nach der oben beschriebenen Methode von 250 °C ermittelt.

Beispiel 2

a) Herstellung eines unvernetzten Copolymerisates:
Nach der in Beispiel 1a) beschriebenen Arbeitsweise wurden 4850 g frisch destilliertes Methylmethacrylat und 150 g $\gamma$-Methacryloyloxypropyltrimethoxysilan in 15 000 g wasserfreiem Toluol polymerisiert.
b) Isolierung des in a) erhaltenen unvernetzten Copolymerisates:
Die gemäß 2a) erhaltene Lösung wurde wie in Beispiel 1b) beschrieben zu Granulat verarbeitet. Es wurden 4635 g Granulat erhalten.
c) Verarbeitung des nach b) erhaltenen Copolymerisat-Granulates zu einem plattenförmigen Formkörper:
In einer Formpresse wurden 27 g gemäß b) erhaltenes Granulat bei einer Temperatur von 170 °C und einem Druck von 200 bar zu einer Platte mit den Abmessungen 100 x 100 x 2 mm verpreßt. Die Platte hatte eine Erweichungstemperatur von 108 °C.
d) Vernetzung des in c) erhaltenen Formkörpers:
Die in 2c) erhaltene Platte wurde in einer Lösung von 100 ml 1n-HCl in 1 l Wasser 2 Stunden bei 60 °C, 2 Stunden bei 80 °C, 2 Stunden bei 90 °C und 10 Stunden bei 98 °C behandelt. Anschließend wurde die Platte 12 Stunden bei 140 °C im Trockenschrank getempert. Es wurde eine transparente Platte mit einem Gelgehalt von 98 % und einer Erweichungstemperatur von 240 °C erhalten.

Beispiel 3

Herstellung einer Gießfolie aus dem in Beispiel 1b) erhaltenen Copolymerisat-Granulat

30 g des in Beispiel 1b) erhaltenen Granulates wurden in 70 g Tetrahydrofuran gelöst. Die Lösung wurde mit Hilfe einer Rakel auf einer Polytetrafluorethylenunterlage zu einem 200 $\mu$m dicken Film ausgestrichen. Nach dem Verdampfen des Tetrahydrofurans wurde der Film auf der Unterlage zunächst 4 Stunden in wäßriger Salzsäurelösung (pH-Wert: 1; Temperatur: 96 °C) behandelt und anschließend zunächst 2 Stunden bei 130 °C und dann 2 weitere Stunden bei 150 °C im Trockenschrank getempert. Nach dem Ablösen der Folie von der Unterlage wurde eine transparente Folie (Dicke: etwa 60 $\mu$m) mit guter Wärmeformbeständigkeit erhalten.

## Patentansprüche

1. Verfahren zur Herstellung von Formkörpern aus vernetzten Polymerisaten durch Verarbeiten (Formen) der unvernetzten Copolymerisate zu den gewünschten Formkörpern und Vernetzen der Copolymerisate in den Formkörpern durch eine Nachbehandlung der Formkörper, dadurch gekennzeichnet, daß man als unvernetzte Copolymerisate Copolymerisate aus Vinylverbindungen und 1 bis 3 hydrolysierbare Gruppen aufweisenden, polymerisierbaren Silanverbindungen verwendet und die aus dem unvernetzten Copolymerisat hergestellten Formkörper mit sauren oder alkalischen wäßrigen Lösungen behandelt.

2. Verfahren nach Anspruch 1, dadurch gekennzeichnet, daß man als 1 bis 3 hydrolysierbare Gruppen aufweisende, copolymerisierbare Silanverbindungen Silane der Formel

$$CH_2 = \overset{\overset{R^1}{|}}{C}-(-CO-O-A-)_b-\overset{\overset{(R^2)_a}{|}}{Si}-(-X)_{3-a} \qquad (I),$$

verwendet, in der

| | |
|---|---|
| $R^1$ | Wasserstoff oder Methyl bedeutet, |
| A | ein geradkettiger oder verzweigter $C_2$-$C_{12}$-Alkylenrest ist, dessen Kohlenstoffkette durch -O-, -NH-, -COO- oder -NH-COO- unterbrochen sein kann, |
| $R^2$ | für einen $C_1$-$C_6$-Alkyl- oder einen Phenyl-Rest steht, |
| X | eine hydrolisierbare Gruppe bedeutet, |
| a | den Wert null, eins oder zwei und |
| b | den Wert null oder eins haben kann. |

3. Verfahren nach Anspruch 2, dadurch gekennzeichnet, daß A für einen $C_2$-$C_8$-Alkylenrest steht, dessen

Kohlenstoffkette gegebenenfalls durch -O- unterbrochen ist.

**4.** Verfahren nach einem der Ansprüche 2 oder 3, dadurch gekennzeichnet, daß X für ein Halogenatom, eine $C_1$-$C_6$-Alkoxygruppe, eine Carboxylat- oder eine Carbonamidgruppe steht.

**5.** Verfahren nach einem der Ansprüche 2 oder 3, dadurch gekennzeichnet, daß X für ein Chloratom, eine Methoxy- oder eine Ethoxygruppe steht.

**6.** Verfahren nach einem der Ansprüche 1 bis 5, dadurch gekennzeichnet, daß man als Vinylverbindungen Ester der (Meth)acrylsäure mit 1 bis 20 C-Atomen im Alkoholteil verwendet.

**7.** Verfahren nach einem der Ansprüche 1 bis 5, dadurch gekennzeichnet, daß man als Vinylverbindungen Mischungen verschiedener (Meth)Acrylsäureester mit einem Gehalt von 40 bis 95 Gew.-% Methylmethacrylat verwendet.

**8.** Verfahren nach einem der Ansprüche 1 bis 7, dadurch gekennzeichnet, daß man solche Copolymerisate verwendet, die zu 50 bis 99,5 Gew.-% aus polymerisierbaren Vinylverbindungen und 50 bis 0,5 Gew.-% Silanen der Formel (I) bestehen.

**9.** Verfahren nach einem der Ansprüche 1 bis 8, dadurch gekennzeichnet, daß man die Nachbehandlung der Formkörper in den wäßrigen sauren oder alkalischen Lösungen bei Temperaturen von 20 bis 150 °C vornimmt.

**10.** Formkörper aus vernetzten Copolymerisaten, erhalten durch Copolymerisation von Vinylverbindungen und 1 bis 3 hydrolysierbare Gruppen aufweisenden, polymerisierbaren Silanverbindungen, Verarbeiten der erhaltenen unvernetzten Copolymerisate zu Formkörpern und Behandeln dieser Formkörper in wäßrigen Säuren oder wäßrigen Alkalien.